# EUROPEAN PATENT APPLICATION

(11) **EP 1 280 354 A2**
(43) Date of publication of application: **29.01.2003**
(21) Application number: 02016120.4
(22) Date of filing: 19.07.2002
(51) Int. Cl.: H04N 7/173, H04N 7/16

(54) **Detection of unauthorized applications, objects, or configurations in a local device of a cable system**

(30) Priority: 19.07.2001 US 908875
(71) Applicant: General Instrument Corporation, Horsham, Pennsylvania 19044 (US)
(72) Inventor: Vince, Lawrence D., Landcdale, Pennsylvania 19446 (US); Safadi, Reem, Horsham, Pennsylvania 19044 (US)
(74) Representative: Bohnenberger, Johannes, Dr.

(57) **Abstract**

A local device associated with a communication network is tested for signs of tampering by downloading from a remote device, via the network, a policing code object into the local device. The policing code object is executed within the local device and a message including the results of tests performed by the policing code object are evaluated to determine whether corrective action is required.

## Description

### BACKGROUND OF THE INVENTION

### FIELD OF THE INVENTION

The present invention generally relates to testing the validity of code or configuration data residing in a local device.

### BACKGROUND INFORMATION

Almost since the inception of Pay TV cable networks, many unauthorized users of Pay TV services have been taking advantage of different ways to receive Pay TV services, without paying for a portion or all of the services that they receive. With the expansion of Pay TV services to include applications comprised of software objects (code) and data, unauthorized use of these services has continued to present a significant and complex problem for Pay TV service providers. A typical Pay TV cable system consists of a hybrid-fiber coax (HFC) network connecting a headend office or a distribution center, to fiber nodes and subscriber devices (e.g., set-top terminals or cable modems).

"Hacks" pose a major problem for the Pay TV industry. A "hack" occurs when a "pirate" or "hacker" modifies a software program in an unauthorized manner, by changing the code itself. Another problem for Pay TV service providers is the use of illegal Pay TV service decoders by subscribers. Such decoders allow subscribers to avoid paying their cable TV company for premium channels by decoding the signals. Such decoders have cost the Pay TV industry millions of dollars in lost revenues on an annual basis.

Most hackers do not try to build decoders from scratch. Instead, the hackers try to modify existing subscriber decoders by enabling optional services without being billed for them, or reconfiguring decoders in such a way that they do not have to pay at all.

As digital set-top terminals for cable and satellite television incorporate the capability to download different operating systems (e.g., Microsoft's WinCE), DLLs, JVMs, multiple system cable operators (MSOs) need a mechanism that will allow them to maintain control of the features, applications, and software objects in general that run or are utilized within these set-top terminals. More specifically, MSOs want the ability to access control services and associated usage of software objects in set-top terminals.

Commonly assigned, co-pending U.S. Patent Application No. 09/389,107, filed on September 2, 1999, entitled "DETECTION OF SUSPECT SOFTWARE OBJECTS AND SIGNATURES AFTER FAILED AUTHENTICATION," which has been incorporated by reference in its entirety herein, discloses methods and apparatus for analyzing a failed software object authentication to determine whether the software object or a signature for the software object is suspect.

"OpenCable" represents an industry effort to standardize cable system interfaces. "Open" is defined as the adherence to either international, North American, or published *de facto* industry standards. The OpenCable specifications allow for the separation of decoding functions performed by a host, and security functions performed by a point-of-deployment (POD) module. This separation supports portability of hosts from one system to another using the POD module corresponding to that system.

Any local devices (e.g., set-top boxes, hosts, PODs) accessible to subscribers of Pay TV cable services are especially prone to tampering for fraudulent or malicious purposes. Timely detection of tampering, as well as prosecution of offenders, have both proven to be difficult in typical analog systems. Protection against such scenarios is just as critical in digital cable systems.

While there have been prior approaches to address security of code objects and authentication of such objects, the present invention complements these approaches by seeking to ensure the integrity of these objects after being downloaded.

### SUMMARY OF THE INVENTION

The present invention determines, over a communication network, the condition of code or configuration data residing in a local device. In a CATV system, a policing code object is downloaded from a remote device, via the communication network, into the local device. The policing code object is then executed in the local device. The remote device receives, from the local device, a message including a summary of the results of one or more tests performed by the policing code object.

The communication network may be an HFC network. The code or configuration data may be stored in memory in the local device. The local device may be one of a set-top terminal, a cable modem, or both (integrated in one device). Alternatively, the local device may be at least one of a POD module and a host. The remote device may be a remotely located access controller.

In a first embodiment of the present invention, the policing code object is downloaded from the remote device into the set-top terminal. Once the policing code object determines the results, these results are sent in a message to the remote device for further processing.

In a second embodiment of the present invention, and particularly in an OpenCable environment, the policing code object is downloaded directly into the host or the POD to perform similar checking. Additionally, the policing code object may be indirectly downloaded to the host via the POD. Irrespective of the direct versus indirect downloading, once the code object determines the results of tests performed by the policing code object, these results are sent in a message to the remote device for further processing.

The message may be an acknowledgement message that includes a confirmation of the authenticity of the test results. The acknowledgement message may be a signed acknowledgement message.

The tests may determine whether the code or configuration data is one or more of the following:
(1) Valid or authorized code or configuration data previously loaded into the local device.
(2) Unauthorized code or configuration data previously loaded into the local device for fraudulent or mischievous purposes.

The remote device may take corrective action in response to one of the following conditions:
(1) The message indicates that valid or authorized code or configuration data is not present in the local device.
(2) The message indicates that unauthorized code or configuration data is present in the local device.
(3) The remote device does not receive a message comprising a summary of the test results within a predetermined period of time.

The corrective action may consist of altering the condition of the local device, denying service to a user of the local device, and/or alerting a system operator.

### BRIEF DESCRIPTION OF THE DRAWINGS

The following detailed description of preferred embodiments of the present invention would be better understood when read in conjunction with the appended drawings. For the purpose of illustrating the present invention, there are shown in the drawings embodiments which are presently preferred. However, the present invention is not limited to the precise arrangements and instrumentalities shown. In the drawings:
FIG. 1 shows a block diagram of a CATV system implementing an HFC network in accordance with the present invention;
FIG. 2 shows a flow diagram in accordance with the present invention;
FIG. 3 shows a block diagram of a system with POD/host devices in accordance with a first embodiment of the present invention; and
FIG. 4 shows a block diagram of a system with POD/host devices in accordance with a second embodiment of the present invention.

### DETAILED DESCRIPTION OF THE INVENTION

Certain terminology is used herein for convenience only and is not to be taken as a limitation on the present invention. A "code object" is an application, an applet, or other software used by a central processor to perform instructions.

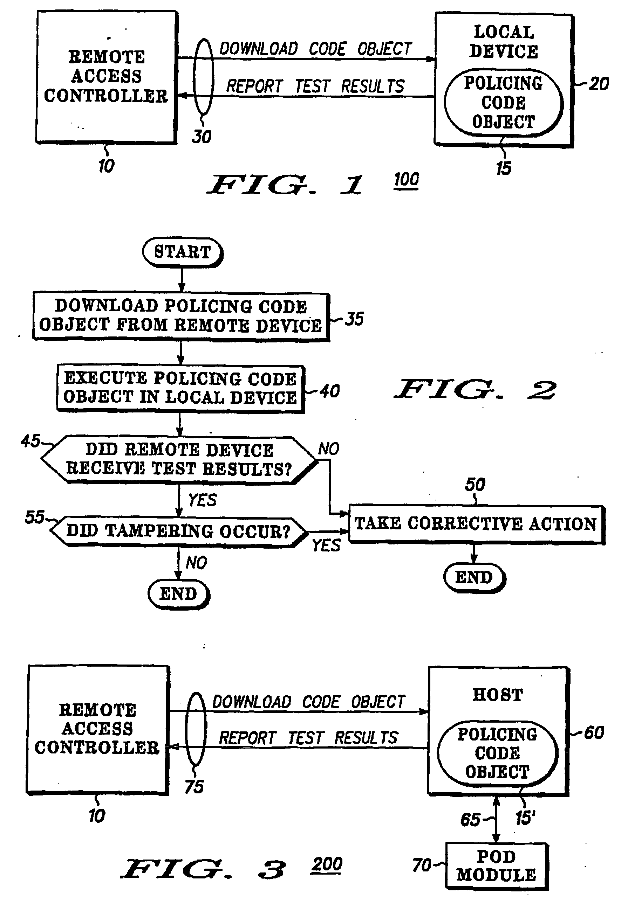

FIG. 1 shows a CATV system 100 communicating over an HFC network in accordance with the present invention. A remote access controller 10 is remotely located from a local device 20 in a cable subscriber's home. The local device 20 may be a set-top terminal/box or a cable modem. The remote access controller 10 and the local device 20 communicate with each other via communication network 30.

FIG. 2 shows a flow diagram illustrating a method of determining the condition of code or configuration data residing in local device 20. A policing code object 15 is downloaded from the remote access controller 10 into the local device 20 via HFC network 30 (step 35). The policing code object 15 is then executed in the local device 20 (step 40) immediately after being downloaded or when instructed by the remote access controller 10. The policing code object 15 determines if valid or authorized code or configuration data previously loaded into the local device 20 is present. The policing code object 15 can also determine the presence of unauthorized code or configuration data previously loaded into the local device 20 for fraudulent or mischievous purposes. There are several methods of achieving this function. These are known to those skilled in the art. For example, one of such methods would entail re-authenticating and checking the integrity of the object by any suitable algorithm. A message is then sent from the local device 20 to the remote access controller 10 via the HFC network 30. If the message is not received after waiting a predetermined period of time (step 45 "NO"), corrective action is taken (step 50). If the message is received (step 45 "YES"), the remote access controller 10 authenticates the message and then analyzes a summary of test results performed by the policing code object 15 that is included in the message. If it is determined that tampering of the local device 20 occurred (step 55 "YES"), corrective action is taken (step 50).

The message may be an acknowledgement message that includes a confirmation of the authenticity of the test results. The acknowledgement message may be a signed acknowledgement message.

The corrective action may consist of altering the condition of the local device 20, denying service to a user of the local device 20, and/or alerting a system operator.

FIG. 3 shows an OpenCable system 200 in accordance with a first OpenCable system embodiment of the present invention. A remote access controller 10 is remotely located from a host 60 and a POD module 70 in a cable subscriber's home. The host 60 and POD module 70 communicate with each other via interface 65. The remote access controller 10 and the host 60 communicate with each other via OpenCable network 75. A policing code object 15' is downloaded from the remote access controller 10 into the host 60 via OpenCable network 75. The policing code object 15' is then executed in the host 60. The policing code object 15' determines if valid or authorized code or configuration data previously loaded into the host 60 is present. The policing code object 15' can also determine whether unauthorized code or configuration data previously loaded into the host 60 for fraudulent or mischievous purposes is present. A message including a summary of test results performed by the policing code object 15' is then sent from the host 60 to the remote access controller 10 via the OpenCable network 75. In a slightly alternate embodiment, the host receives the policing application via the POD from the remote device (not shown). All other steps remain the same.

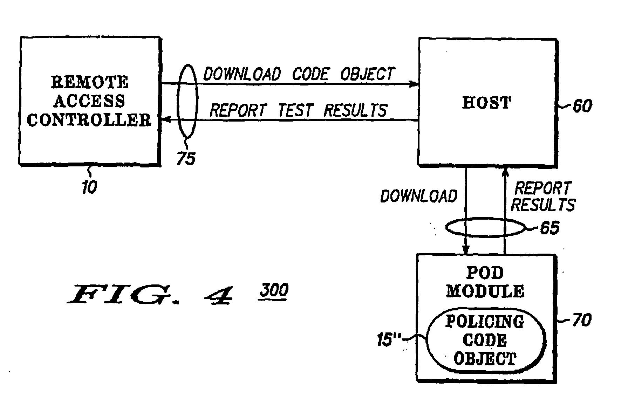

FIG. 4 shows an OpenCable system 300 in accordance with a second OpenCable system embodiment of the present invention. A remote access controller 10 is remotely located from a host 60 and a POD module 70 in a cable subscriber's home. The host 60 and POD module 70 communicate with each other via interface 65. The remote access controller 10 and the host 60 communicate with each other via OpenCable network 75. A policing code object 15" is downloaded from the remote access controller 10 into the POD module 70 via OpenCable network 75, host 60, and interface 65. The policing code object 15" is then executed in the POD module 70. The policing code object 15" determines if valid or authorized code or configuration data previously loaded into the POD module 70 is present. The policing code object 15" can also determine whether unauthorized code or configuration data previously loaded into the POD module 70 for fraudulent or mischievous purposes is present. A message including a summary of test results performed by the policing code object 15" is then sent from the POD module 70 to the remote access controller 10 via the interface 65, host 60 and OpenCable network 75. For additional protection and security, once the policing object generates the results, it may be deleted and loaded again as determined by the remote controller.

The present invention may be implemented with any combination of hardware and software. If implemented as a computer-implemented apparatus, the present invention is implemented using means for performing all of the steps and functions described above.

The present invention can be included in an article of manufacture (e.g., one or more computer program products) having, for instance, computer useable media. The media has embodied therein, for instance, computer readable program code means for providing and facilitating the mechanisms of the present invention. The article of manufacture can be included as part of a computer system or sold separately.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. A method of determining, over a communication network, the condition of code or configuration data residing in a local device, the method comprising:
(a) downloading from a remote device, via the communication network, a policing code object into the local device;
(b) executing the policing code object in the local device; and
(c) the remote device receiving, from the local device, a message including a summary of the results of one or more tests performed by the policing code object.

2. The method of claim 1, wherein the tests determine whether the code or configuration data is one or more of (i) valid or authorized code or configuration data previously loaded into the local device, and (ii) unauthorized code or configuration data previously loaded into the local device for fraudulent or mischievous purposes.

3. The method of claim 2, further comprising:
(d) the remote device taking corrective action in response to (i) the message indicating that valid or authorized code or configuration data is not present in the local device, (ii) the message indicating that unauthorized code or configuration data is present in the local device, or (iii) the remote device not receiving a message comprising a summary of the test results within a predetermined period of time.

4. The method of claim 3, wherein the corrective action consists of one or more of the following actions:
(I) altering the condition of the local device;
(II) denying service to a user of the local device; and
(III) alerting a system operator.

5. The method of claim 1, wherein the communication network is an OpenCable network, and the local device is at least one of a point-of-deployment (POD) module and a host.

6. The method of claim 5, wherein the message is sent from the POD module to the remote device via the host.

7. The method of claim 1, wherein the message is an acknowledgement message that includes a confirmation of the authenticity of the test results.

8. The method of claim 7, wherein the acknowledgement message is a signed acknowledgement message.

9. The method of claim 1, wherein the communication network is a hybrid-fiber coax (HFC) network.

10. The method of claim 1, wherein the local device is at least one of a set-top terminal and a cable modem.

11. The method of claim 1, wherein the code or configuration data is stored in a memory in the local device.

12. The method of claim 1, wherein the remote device is a remotely located access controller.

13. The method of claim 1, wherein step (b) is implemented immediately after step (a) has been completed or when instructed by the remote device.

14. A CATV system, comprising:
(a) a remote device;
(b) a communication network; and
(c) a local device, wherein code or configuration data resides in the local device, a policing code object is downloaded from the remote device into the local device via the communication network, the policing code object is executed in the local device, and the remote device receives, from the local device, a message including a summary of the results of one or more tests performed by the policing code object.

15. The CATV system of claim 14, wherein the tests determine whether the code or configuration data is one or more of (i) valid or authorized code or configuration data previously loaded into the local device, and (ii) unauthorized code or configuration data previously loaded into the local device for fraudulent or mischievous purposes.

16. The CATV system of claim 15, wherein the remote device takes corrective action in response to (i) the message indicating that valid or authorized code or configuration data is not present in the local device, (ii) the message indicating that unauthorized code or configuration data is present in the local device, or (iii) the remote device not receiving a message comprising a summary of the test results within a predetermined period of time.

17. The CATV system of claim 16, wherein the corrective action consists of one or more of the following actions:
(I) altering the condition of the local device;
(II) denying service to a user of the local device; and
(III) alerting a system operator.

18. The CATV system of claim 14, wherein the communication network is an OpenCable network, and the local device is at least one of a point-of-deployment (POD) module and a host.

19. The CATV system of claim 18, wherein the message is sent from the POD module to the remote device via the host.

20. The CATV system of claim 14, wherein the message is an acknowledgement message that includes a confirmation of the authenticity of the test results.

21. The CATV system of claim 20, wherein the acknowledgement message is a signed acknowledgement message.

22. The CATV system of claim 14, wherein the communication network is a hybrid-fiber coax (HFC) network.

23. The CATV system of claim 14, wherein the local device is at least one of a set-top terminal and a cable modem.

24. The CATV system of claim 14, wherein the code or configuration data is stored in a memory in the local device.

25. The CATV system of claim 14, wherein the remote device is a remotely located access controller.

26. The CATV system of claim 14, wherein the policing code object is executed in the local device immediately after being downloaded or when instructed by the remote device.
